# EUROPEAN PATENT APPLICATION

(11) **EP 4 524 785 A1**
(43) Date of publication of application: **19.03.2025**
(21) Application number: 23315351.9
(22) Date of filing: 13.09.2023
(51) Int. Cl.: G06F 21/14

(54) **METHOD TO SECURE A SOFTWARE CODE**

(71) Applicant: THALES DIS FRANCE SAS, 92190 Meudon (FR)
(72) Inventor: Grenier, Thomas, 13600 La Ciotat (FR); De Francesco, Samuele, 83270 Saint Cyr Sur Mer (FR)
(74) Representative: Bricks, Amélie

(57) **Abstract**

The present invention relates to a method of securing a software code comprising at least one expression,
said method generating a secure software code and comprising performed by a processor, the steps of:
⊏ determining (S1) in the software code an expression to be protected comprising first variables,
⊏ generating (S2) from said expression to be protected a modified expression by inserting a plurality of second variables in said expression to be protected such that said modified expression is equivalent to said expression to be protected when said second variables verify a first predetermined condition,
⊏ generating (S3) a mixed Boolean-arithmetic expression semantically equivalent to said modified expression,
⊏ selecting (S4) at least one variable among said second variables in said mixed Boolean-arithmetic expression and choosing a constant value for each of said at least one selected variable,
C partially evaluating (S5) said generated mixed Boolean-arithmetic expression by setting each of said at least one selected variable to said chosen constant value and replacing in the software code said expression to be protected with said partially evaluated mixed Boolean-arithmetic expression,
⊏ securely ensuring (S6) that, when said partially evaluated mixed Boolean-arithmetic expression is evaluated at runtime, said first predetermined condition to be verified by said second variables is met.

## Description

### FIELD OF THE INVENTION

The present invention relates to the field of software protection, and more particularly of anti-tampering and anti-reverse engineering techniques. It discloses an obfuscation method especially enabling to conceal arithmetic expressions in a software.

### BACKGROUND OF THE INVENTION

Today, many services are provided to users by running software applications. Such applications may run on various devices, mobile or not, such as desktop computers, laptops, point of sale terminals, smartphones, etc. They may run locally or be implemented across a network like a LAN or the Internet. Some devices such as smart cards or bank credit cards may even be dedicated to running one or a few applications. Such applications are usually run in unsecured environments where an attacker may gain some control or even full control of the operation of the system running the application. Consequently, most of these applications need to implement some security mechanisms in order to protect data handled by the application from being read or modified by such an attacker.

An attacker may try to understand the operation of a software by reverse-engineering of the compiled code executed by the system. He may then access secure information handled by the software and/or modify the software in order to perform malicious operations. For example, an attacker could modify a banking software in order to perform malicious financial transactions or modify a license-protected software in order to run it for free without purchasing a license. Such a reverse-engineering is usually performed using tools such as code analyzers and debuggers that extract from a compiled code information about the operation of the code such as a control flow graph describing the order of execution of instructions in the-code.

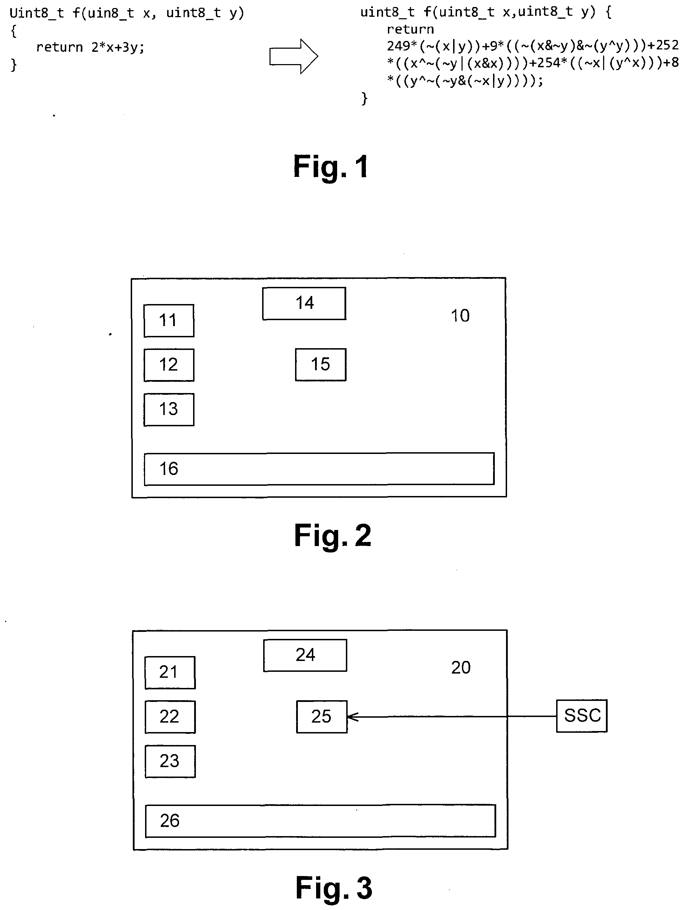

In order to prevent such an analysis, an obfuscation technique has been proposed which replaces arithmetic or Boolean expressions by more complicated, but semantically equivalent, Mixed Boolean-Arithmetic expressions (MBA). An example is provided on **Figure** 1, in which the expression 2x + 3y is replaced by a much longer expression which is semantically equivalent. Nevertheless, some attacks are able to efficiently reduce MBAs to simpler expressions by using interpolation methods. It enables an attacker to revert a protected expression to its original value and cancels the obfuscation provided by MBAs.

Consequently, there is a need for an obfuscation method generating MBAs which can't be correctly simplified to their original expression by existing interpolation-based MBA simplification tools.

### SUMMARY OF THE INVENTION

For this purpose and according to a first aspect, this invention therefore relates to a method of securing a software code comprising at least one expression,
said method generating a secure software code and comprising performed by a processor, the steps of:
E determining in the software code an expression to be protected comprising first variables,
E generating from said expression to be protected a modified expression by inserting a plurality of second variables in said expression to be protected such that said modified expression is equivalent to said expression to be protected when said second variables verify a first predetermined condition,
⊏ generating a mixed Boolean-arithmetic expression semantically equivalent to said modified expression,
⊏ selecting at least one variable among said second variables in said mixed Boolean-arithmetic expression and choosing a constant value for each of said at least one selected variable,
⊏ partially evaluating said generated mixed Boolean-arithmetic expression by setting each of said at least one selected variable to said chosen constant value and replacing in the software code said expression to be protected with said partially evaluated mixed Boolean-arithmetic expression,
E securely ensuring that, when said partially evaluated mixed Boolean-arithmetic expression is evaluated at runtime, said first predetermined condition to be verified by said second variables is met.

This method enables to replace in the software code the expression to be protected by an MBA expression which is not equivalent to this expression, and which therefore cannot be simplified to retrieve this original expression. And in the same time, it provides a way to make the MBA expression equivalent to the original expression later, at runtime.

Ensuring said first predetermined condition to be verified by said second variables is met may comprise inserting in the software code using an obfuscation method a second predetermined condition to be verified by second variables not yet set to a constant value in said mixed Boolean-arithmetic expression.

By doing so, an execution device is able, when executing the secure software code, to get knowledge of the second predetermined condition and to set the remaining second variables such that the first predetermined condition is verified, therefore ensuring that the MBA expression becomes semantically equivalent to the expression to be protected that it replaces.

Second variables may be decomposed into at least one combination of variables in said modified expression before generating said mixed Boolean-arithmetic expression.

It enables to easily increase the number of variables in the MBA expression, making it more difficult for an attacker to guess from the MBA expression the expression to be protected.

Said second variables and said first variables may play a symmetrical role in said modified expression.

It enables to prevent an attacker from guessing among the MBA expression variables which are first variables from the original expression to be protected and which are second variables added to it.

According to a second aspect, this invention relates to a method of executing, by a processor, instructions of a secure software code generated according to the method according to the first aspect, comprising:
- setting, in said mixed Boolean-arithmetic expression, said second variables not yet set to a constant value to constant values ensuring that said first predetermined condition is met by said second variables,
- evaluating said mixed Boolean-arithmetic expression,
- executing instructions using said evaluated mixed Boolean-arithmetic expression.

According to a third aspect, this invention relates to a computer program product directly loadable into the memory of at least one computer, comprising software code instructions for performing the steps of the methods according to the first and second aspect of the invention when said product is run on the computer.

According to a fourth aspect, this invention relates to an electronic device comprising a processor configured for performing the steps of the methods according to the first or to the second aspect of the invention.

To the accomplishment of the foregoing and related ends, one or more embodiments comprise the features hereinafter fully described and particularly pointed out in the claims.

### BRIEF DESCRIPTION OF THE DRAWINGS

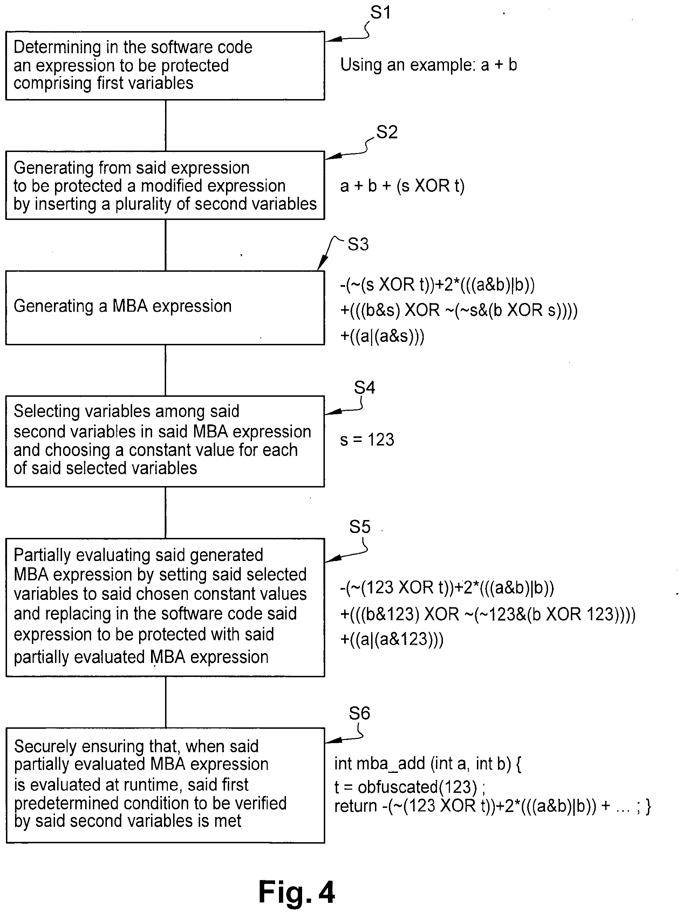

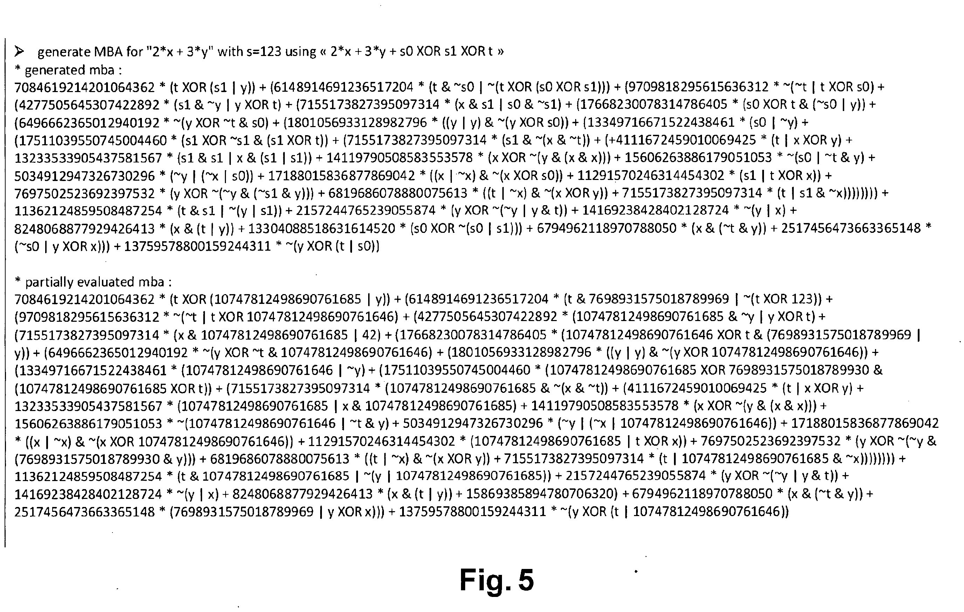

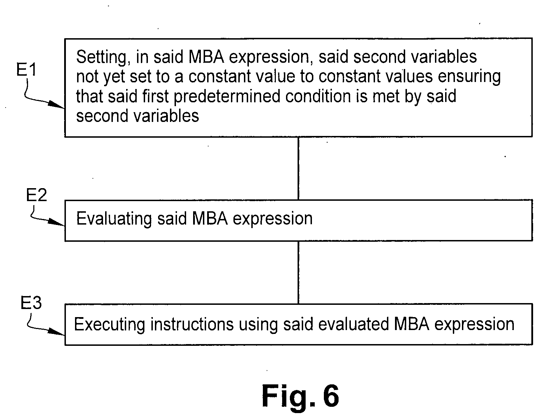

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
✔ Figure 1 illustrates an example of the obfuscation technique which replaces arithmetic or Boolean expressions by more complicated, but semantically equivalent, Mixed Boolean-Arithmetic expressions (MBA);
✔ Figure 2 illustrates schematically a securing device according to an embodiment of the present invention;
✔ Figure 3 illustrates schematically an execution device according to an embodiment of the present invention;
✔ Figure 4 illustrates schematically a method of securing a software code according to an embodiment of the present invention with an example;
✔ Figure 5 illustrates an example of generated MBA expression and of partially evaluated MBA expression generated according to an embodiment of the present invention;
✔ Figure 6 illustrates schematically a method of executing instructions of a secure software code according to an embodiment of the present invention.

### DETAILED DESCRIPTION OF EMBODIMENTS OF THE INVENTION

The invention aims at securing a software code SC by obfuscating at least one expression to be protected in this software code. It produces a secure software code SSC such that it would be hard for an attacker to get knowledge of these expressions by analyzing the secure software code with existing tools such as a MBA simplifier, a code analyzer or a debugger.

Compiling translates a source code, written in a high-level programming language such as C or Fortran, into an object code written in a low-level language, such as machine code which takes into account the hardware implementation of the system on which the code is supposed to be executed. Compiling often performs intermediate steps such as syntax analysis, control flow graph generation and assembly code generation. In order to build an executable file of the compiled code, compilation is generally followed by a linking step linking together multiple files containing object code into a single executable file.

Most steps of the embodiments described hereafter may be applied to any of source code, assembly code and machine code. The following paragraphs will describe an application of the obfuscating method according to the invention to source code, called hereafter software code, but it shall not be interpreted as a limitation of the scope of the invention. The various arrangements that could be derived by a man skilled in the art by applying one or more of the steps of the invention to any other code representations such as compiled code are included in the scope of the invention.

A first aspect of the invention is an obfuscation method for securing the software code SC comprising at least one expression to be protected. Such a securing method is performed by a securing device 10 treating the software code SC comprising computer code instructions comprising the at least one expression to be protected and producing the secure software code SSC. The obtained secure software code SSC can then be securely executed by an execution device 20.

Such a securing device 10 may be any electronic device including a processor. For example, it may be a personal computer PC on which a development environment was installed. **Figure 2** describes an exemplary embodiment of such a securing device comprising a first processor 11, a first RAM memory 12, a first communication unit 13 such as an Ethernet or Wifi network adapter, a first display 14, first mass storage means 15 such as a hard drive, and first user input means 16. The software code SC to be secured may be stored on the first mass storage means 15 of the securing device. The secure software code SSC, obtained after the securing device 10 applies the method according to the first aspect to the software code SC, can also be stored on the first mass storage 15.

**Figure 3** describes an exemplary embodiment of the execution device 20. For example, it may be a personal computer PC, a mobile device such as a smartphone or a tablet, or a public terminal in a bank or a point of sale. It may also be a simple chip included in a smart card or a credit card. It may comprise a second processor 21, a second RAM memory 22, a second communication unit 23 such as an Ethernet or Wifi network adapter, a second display 24, second mass storage means 25 such as a hard drive, and second user input means 26. The secure software code SSC, to be executed by the second processor 21 of the execution device 20, may be stored on the second mass storage means 25 of the executing device. The electronic device 20 may be of any type similar or different than the one of the execution device. Both devices may share the same hardware architecture, such as x86, ARM or PowerPC, or have different architectures.

To produce MBA expressions resistant to existing MBA simplifying algorithms, such as simplifiers based on interpolation, the main idea of the method according to the invention is to add in the expression to be protected, and therefore in the MBA generated from it, additional variables, such that the generated MBA is primarily not equivalent to the expression to be protected, and such that it becomes equivalent to it only when the additional variables verify a secret condition. By doing so, the generated MBA only becomes equivalent to the expression to be protected at runtime, when the additional variables in it are set to values matching the secret condition. As long as at least part of these additional variables are not set, the MBA is not true and can't be reduced to the original expression to be protected by an attacker.

The following paragraphs describe the steps of the method according to the first aspect of the invention, securing the software code SC and producing the secure software code SSC, as depicted on **Figure 4****.** These steps are performed by the first processor 11 of the securing device 10 and are all labeled with the letter "S" followed by the number of the step.

When needed, reference is made to steps performed by the execution device 20 when executing the secure software code SSC, after the method according to the first aspect is completed. Such execution steps are labeled with the letter "E" followed by the number of the step and are depicted on **Figure 6****.**

The operators mentioned here after are defined as follows:
- ~ is "bitwise not",
- & is "bitwise and",
- | is "bitwise or",
- -, +, * are arithmetic operations.

In a first securing step S1, the first processor determines in the software code an expression to be protected. This expression may either be an arithmetic expression or a Boolean expression. It comprises variables, hereafter referred to as first variables.

In a second securing step S2, the first processor generates from the expression to be protected a modified expression by inserting a plurality of second variables in the expression to be protected such that the modified expression is equivalent to the expression to be protected when said second variables verify a first predetermined condition.

In the example of Figure 4, two variables "s" and "t" are inserted in the expression a+b, forming the modified expression a + b + (s XOR t). This modified expression is not all the time equivalent to a+b but becomes equivalent to it when the condition "s=t" is verified.

The second securing step S2 may be repeated several times such that the variables added to the expression to be protected shall verify several conditions for the modified expression to be equivalent to the expression to be protected.

In a third securing step S3, the first processor generates a mixed Boolean-arithmetic expression semantically equivalent to the modified expression. Such an MBA expression may be generated from the modified expression using any existing MBA generation tool. It comprises both the first variables of the original expression to be protected and the second variables added to generate the modified expression.

In the example of Figure 4, the modified expression a + b + (s XOR t) is turned into the semantically equivalent MBA expression -(~(s XOR t))+2*(((a&b)|b)) +(((b&s) XOR ~(~s&(b XOR s)))) +((a|(a&s))). As it was the case for the modified expression, this MBA expression is semantically equivalent to the expression to be protected a + b only when the added variables s and t verify the condition "s=t".

In a fourth securing step S4, the first processor selects at least one variable among the second variables in the mixed Boolean-arithmetic expression and chooses a constant value for each of the at least one selected variable.

In a fifth securing step S5, the first processor partially evaluates the generated mixed Boolean-arithmetic expression by setting each of the at least one variable selected at the fourth securing step S4 to the constant value chosen for it at this step. This evaluation is only partial since some of the second variables of the MBA expression have not been assigned a value. Because of that, at this stage of the method, the partially evaluated MBA expression is not equivalent to the original expression to be protected. The partially evaluated MBA expression is not even equivalent to the MBA expression generated during the third securing step S3. Therefore, it cannot be reduced to this original expression by an attacker. Then, the first processor replaces in the software code the expression to be protected with the partially evaluated mixed Boolean-arithmetic expression.

In the example of Figure 4, the variable "s" is set to the value "123". Therefore, the MBA expression is evaluated as "*-(~(123 XOR t))*+*2*(((a&b)*|*b))* +*(((b&123) XOR -(-123&(b XOR* 123)))) +((al(a&123)))".

The partially evaluated MBA will only become equivalent to the expression to be protected after the remaining second variables, to which no value has been assigned yet, are assigned values such that the first predetermined condition is verified. Therefore, the method of the invention comprises a sixth securing step S6 during which it is securely ensured that, when said partially evaluated mixed Boolean-arithmetic expression is later evaluated at runtime, the first predetermined condition will be verified by the second variables. As a first example, the first processor may further modify the software code by hiding in it some information enabling the execution device 20, when executing the secure software code SSC at runtime, to make the second variables verify the first predetermined condition. Such information may for example be a second predetermined condition to be verified only by the second variables not yet set to a constant value in the mixed Boolean-arithmetic expression. For more safety, such an information may be inserted in the software code using known obfuscation methods. As another example, such information may be securely stored outside the secure software code. It could for example be stored in an encrypted token stored in a non-volatile memory of the securing device along with the generated secure software code or be derived from a secret value stored into a hardware secure module on the execution device.

In the example of Figure 4, since the first predetermined condition is "s=t" and since the variable "s" has been set to the value "123", the second predetermined condition to be verified is "t=123" in order to ensure that the condition "s=t" is verified, which in turn will make the MBA equivalent to the original expression to be protected "a+b".

**Figure 5** gives another example where the expression to be protected "2x+3y" has been used to generate the modified expression "2*x + 3*y + s0 XOR s1 XOR t", from which an equivalent MBA expression has been generated and partially evaluated by setting "s=123". The generated MBA expression and the result of its partial evaluation are shown on Figure 5.

To make things harder for an attacker, the second variables may be decomposed into at least one combination of variables in the modified expression generated at the second securing step S2 before generating said mixed Boolean-arithmetic expression at the third securing step S3. In the example of Figure 4, the second variable "s" inserted in the expression to be protected may be decomposed into s0 *XOR* s1. By doing so, the variables s0 and s1 will be scattered across the generated MBA, which will make the task of an attacker even more complicated.

An attacker playing with the generated MBA and looking for second variables may notice in some cases that variations on second variables have less impact on the evaluation of the MBA than variations on first variables. Therefore, to prevent an attacker from gaining such an information, the second variables may be inserted into the expression to be protected in such a way that second variables and first variables play a symmetrical role in the modified expression.

In the example of Figure 4, the modified expression may be chosen as "a + (b XOR s XOR t)" to make the second variables "s" and "t" play the same role as the first variable "b".

After the steps described above have been performed, the secure software code SSC has been generated and is ready for being executed by the execution device 20 as illustrated on **Figure 6****.**

In a first execution step E1, the processor of the execution device, called "second processor", sets in the mixed Boolean-arithmetic expression, the second variables not yet set to a constant value to constant values ensuring that said first predetermined condition is met by said second variables. As an example, when a second predetermined condition to be verified by the second variables not yet set to a constant value has been hidden in the secure software code, the second processor may retrieve this second predetermined condition and set the second variables not yet set to a constant value to values verifying the second predetermined condition.

In the example of Figure 4, the second processor would set the variable t to the value "123" to make it verify the second condition "t=123".

In a second execution step E2, the second processor evaluates the mixed Boolean-arithmetic expression. At this stage, the MBA expression is semantically equivalent to the original expression to be protected and is therefore evaluated to the same value.

Finally, in a third execution step E3, the second processor executes the instructions of the secure software code which use the evaluated mixed Boolean-arithmetic expression, for example as an input or a parameter.

According to a second aspect, the invention relates to a computer program product directly loadable into the memory of at least one computer, comprising software code instructions for performing, when said product is run on the computer, the steps of the methods described here before.

According to a third aspect, this invention relates to an electronic device (securing device 10 or execution device 20) comprising a processor 11, 21, configured for performing the steps of the methods described here before and illustrated on Figures 2 and 3.

As a result, the method and device according to the invention enable to generate MBA expressions which are equivalent to the expression to be protected they replace only at runtime. Therefore, at any other time, existing tools and algorithms which are able to simplify state-of-the-art MBA expressions will not be able to retrieve the expression to be protected from the corresponding MBA expression generated according to the invention.

## Claims

1. A method of securing a software code (SC) comprising at least one expression,
said method generating a secure software code (SSC) and comprising performed by a processor (11), the steps of:
- determining (S1) in the software code an expression to be protected comprising first variables,
- generating (S2) from said expression to be protected a modified expression by inserting a plurality of second variables in said expression to be protected such that said modified expression is equivalent to said expression to be protected when said second variables verify a first predetermined condition,
- generating (S3) a mixed Boolean-arithmetic expression semantically equivalent to said modified expression,
- selecting (S4) at least one variable among said second variables in said mixed Boolean-arithmetic expression and choosing a constant value for each of said at least one selected variable,
- partially evaluating (S5) said generated mixed Boolean-arithmetic expression by setting each of said at least one selected variable to said chosen constant value and replacing in the software code said expression to be protected with said partially evaluated mixed Boolean-arithmetic expression,
- securely ensuring (S6) that, when said partially evaluated mixed Boolean-arithmetic expression is evaluated at runtime, said first predetermined condition to be verified by said second variables is met.

2. The method of claim 1, wherein ensuring said first predetermined condition to be verified by said second variables is met (S6) comprises inserting in the software code using an obfuscation method a second predetermined condition to be verified by second variables not yet set to a constant value in said mixed Boolean-arithmetic expression.

3. The method of claim 1 or 2, wherein second variables are decomposed into at least one combination of variables in said modified expression before generating said mixed Boolean-arithmetic expression.

4. The method of any one of claims 1 to 3, wherein said second variables and said first variables play a symmetrical role in said modified expression.

5. A method of executing, by a processor (21), instructions of a secure software code generated according to the method of any of claims 1 to 4, comprising:
- setting (E1), in said mixed Boolean-arithmetic expression, said second variables not yet set to a constant value to constant values ensuring that said first predetermined condition is met by said second variables,
- evaluating (E2) said mixed Boolean-arithmetic expression,
- executing instructions using said evaluated mixed Boolean-arithmetic expression (E3).

6. A computer program product directly loadable into the memory of at least one computer, comprising software code instructions for performing the steps of any one of claims 1 to 5 when said product is run on the computer.

7. An electronic device (10, 20) comprising a processor (11, 21) configured for performing the steps of any one of claims 1 to 5.
